# FASCICULE DE BREVET EUROPEEN

(11) **EP 0 364 336 B1**
(45) Date de publication et mention de la délivrance du brevet: **03.03.1993**
(21) Numéro de dépôt: 89402728.3
(22) Date de dépôt: 03.10.1989
(51) Int. Cl.: B29B 13/02, B29C 51/42

(54) **Dispositif de chauffage d'une bande thermoplastique stérilisée**
Vorrichtung zum Erwärmen einer keimfreien Kunststoffbahn
Apparatus for heating a sterile thermoplastic web

(30) Priorité: 03.10.1988 FR 8812892
(43) Date de publication de la demande: 18.04.1990
(73) Titulaire: FORMSEAL, F-14700 Falaise (FR)
(72) Inventeur: Pacilly, Daniel Paul, F-14700 Falaise (FR)
(74) Mandataire: Schrimpf, Robert

(56) Documents cités:
- EP-A- 0 033 260
- DE-B- 1 220 998
- FR-A- 2 078 575
- FR-A- 2 219 878
- FR-A- 2 268 694
- FR-A- 2 374 217

## Description

La présente invention concerne le chauffage d'une bande thermoplastique stérilisée servant à réaliser des récipients par thermoformage.

Il s'agit d'une étape essentielle dans le conditionnement stérile, en particulier le conditionnement alimentaire. Cette étape intervient en effet après la stérilisation de la bande thermoplastique et son séchage, résultant du fait qu'on utilise en général un agent stérilisant liquide tel que le peroxyde d'hydrogène, et avant le formage à chaud proprement dit des récipients.

A quelques variations mineures près, la technique utilisée jusque là a presque toujours été la même : le dispositif de chauffage comporte deux éléments chauffants, en général mobiles, entre lesquels passe la bande thermoplastique, et ces deux éléments chauffants présentent des empreintes en relief correspondant à la forme des récipients à réaliser; l'ensemble est en outre intégré dans une enceinte stérile unique, laquelle enceinte entoure toute la ligne jusqu'au remplissage des récipients. Cette technique est par exemple illustrée dans le brevet britannique N° 1 437 164.

Outre le caractère volumineux des machines utilisées en raison de la présence d'une enceinte stérile unique, ce principe présente de toute façon des inconvénients notables en ce qui concerne l'homogénéité de l'apport thermique au niveau des empreintes des deux plateaux lorsque la machine fonctionne.

En effet, il est tout d'abord nécessaire que les empreintes du plateau chauffant supérieur soient parfaitement en regard de celles du plateau chauffant inférieur : par exemple, en cas d'empreintes circulaires, si les cercles correspondants ne sont pas parfaitement alignés, cela induit sur la bande thermoplastique deux ménisques plus ou moins importants qui sont imparfaitement chauffés, ce qui provoque inévitablement l'apparition de défauts sur les récipients formés, dont notamment au niveau des collerettes des bords de récipients, avec les conséquences néfastes qui en découlent pour la présentation du produit et éventuellement pour la stérilité de l'emballage.

Pour préserver la géométrie, on a alors utilisé des guidages de plateaux chauffants sur colonnettes, et donc des produits lubrifiants pour éviter tout coincement du système, ce qui est peu compatible avec le degré de stérilité recherché dans le domaine alimentaire.

En outre, même si les empreintes des deux plateaux coïncident, l'apport thermique reste peu homogène, notamment dans les zones proches des bords de la bande thermoplastique: les effets de bords restent d'ailleurs toujours un problème difficile à surmonter dans ce domaine technique, et ils induisent fréquemment un rebut pour les récipients concernés.

Enfin, la conception de ces machines ne facilite pas la tâche des opérateurs en raison des problèmes d'accessibilité et de démontabilité.

On pourrait être tenté de limiter la zone stérile, afin de remédier à certains des inconvénients précités, mais on se heurterait à un inconvénient supplémentaire lors de chacune des remontées du plateau chauffant supérieur : en effet, une remontée de ce plateau induit un phénomène de pompage qui altère alors notablement la stérilité du fait de l'admission d'une quantité d'air pollué, et ce d'autant plus que la course de remontée est importante.

L'état de la technique est également illustré par les brevets américains N° 3 661 484, N° 4 329 829, N° 4 512 133 et N° 3 972 153, et par le brevet allemand N° 1 220 998 et le brevet britannique N° 1 593 986.

L'invention a pour objet de réaliser un dispositif de chauffage ne présentant pas les inconvénients précités, en particulier au niveau de l'homogénéité de l'apport thermique lorsque la machine fonctionne, et de la précision des zones chauffées de la bande thermoplastique.

L'invention a également pour objet de réaliser un dispositif plus satisfaisant au niveau de son accessibilité et sa démontabilité.

L'invention a aussi pour objet de réaliser un dispositif permettant de limiter la zone stérile, et donc intégrable dans une machine de traitement plus compacte, en limitant au maximum les effets néfastes de tout phénomène de pompage.

Il s'agit plus particulièrement d'un dispositif de chauffage d'une bande thermoplastique stérilisée servant à réaliser des récipients par thermoformage, présentant des éléments chauffants entre lesquels passe la bande thermoplastique, caractérisé par le fait qu'il comporte :
. une enceinte fermée délimitée par un plateau supérieur et la bande thermoplastique elle-même, et susceptible d'être balayée par un flux d'air stérile protégeant ladite bande thermoplastique ;
. un plateau supérieur déplaçable parallèlement à lui-même entre une position basse de travail et une position haute de repos, ledit plateau supérieur comportant une plaque chauffante unique qui est d'une part chauffée sur toute sa longueur, en considérant la direction de défilement de la bande thermoplastique, et présente d'autre part une face inférieure lisse contactée par ladite bande en position basse de travail ;
. un plateau inférieur déplaçable parallèlement à lui-même et au plateau supérieur entre une position haute de travail et une position basse de repos, ledit plateau inférieur comportant au moins une plaque chauffante présentant des empreintes correspondant aux récipients à réaliser et une face supérieure contactée par la bande thermoplastique en position haute de travail ;
. des organes fixes de support montés adjacents à la plaque chauffante précitée du plateau inférieur de telle façon que la bande thermoplastique glisse sur eux lors du passage de celle-ci dans ladite enceinte, lesdits organes fixes assurant seuls le support de ladite bande lorsque ledit plateau inférieur est en position basse.

Selon un mode de réalisation avantageux, le plateau supérieur est essentiellement constitué par une plaque chauffante, et une plaque supérieure fixée à ladite plaque chauffante, ladite plaque supérieure étant reliée à des moyens mécaniques d'actionnement servant à déplacer ledit plateau supérieur, de façon que lesdits moyens soient disposés en zone froide au-dessus dudit plateau, en dehors de la zone stérile ; de préférence, la plaque supérieure du plateau supérieur est montée à distance de la plaque chauffante, avec interposition de cales intermédiaires isolantes.

Il est en outre intéressant que la plaque supérieure du plateau supérieur présente un clinquant périphérique saillant, ledit clinquant coopérant avec un rebord associé du bâti fixe pour assurer l'étanchéité de l'enceinte fermée, tant en position haute qu'en position basse du plateau supérieur : ceci a également pour effet de diminuer considérablement le volume stérile en position de travail.

Avantageusement, la plaque chauffante du plateau supérieur contient au moins une résistance chauffante dont la disposition est prévue pour un apport thermique aussi homogène que possible ; en particulier, la plaque chauffante du plateau supérieur contient une pluralité de résistances chauffantes, indépendantes entre elles, définissant une succession de zones longitudinales de chauffage : ceci permet de contrôler avec précision l'apport thermique du plateau supérieur, en particulier en modulant la température de façon à tenir compte des effets de bords pour la bande thermoplastique.

Il est par ailleurs intéressant que la plaque chauffante du plateau supérieur soit constituée par une première plaque rainurée inférieurement pour recevoir la ou les résistances chauffantes, et par une deuxième plaque fixée en-dessous de la première, et dont la face inférieure présente un plaquage lisse pour le contact avec la bande thermoplastique ; en particulier, on obtient de bons résultats si l'on réalise cette deuxième plaque en aluminium, le plaquage inférieur lisse associé à ladite deuxième plaque étant en matière plastique telle que le polytétrafluoréthylène.

Il est également avantageux que le châssis supérieur soit articulé, afin d'autoriser un accès aisé et rapide à l'intérieur de l'enceinte, un verrou associé étant prévu pour en assurer la fermeture étanche : ceci est très intéressant pour l'accessibilité, car il est alors aisé de contrôler périodiquement l'état de propreté de la face inférieure du plateau supérieur (le plaquage) et éventuellement de le nettoyer, et de contrôler aussi l'état de surface du plateau inférieur au niveau des empreintes.

Selon un mode de réalisation avantageux, le plateau inférieur est essentiellement constitué par une plaque inférieure sur laquelle est ou sont montées la ou les plaques chauffantes, ladite plaque inférieure étant reliée à des moyens mécaniques d'actionnement servant à déplacer ledit plateau inférieur, de façon que lesdits moyens soient disposés en zone froide en-dessous dudit plateau.

De préférence alors, la ou les plaques chauffantes du plateau inférieur sont reliées à la plaque inférieure dudit plateau par un montage flottant, de préférence par interposition de ressorts hélicoïdaux ; en particulier, le plateau inférieur comporte une pluralité de plaques chauffantes indépendantes, organisées successivement sur sa longueur, en considérant la direction de défilement de la bande thermoplastique, et chaque plaque chauffante du plateau inférieur contient une résistance chauffante indépendante, de façon à définir une succession de zones de chauffage organisées pour un apport thermique aussi homogène que possible : ceci permet de contrôler avec précision l'apport thermique du plateau supérieur, par exemple en prévoyant des températures différentes prédéterminées tout au long du plateau, ce qui compense aussi les effets d'une migration de la chaleur, et améliore considérablement la régularité du champ thermique.

Il est par ailleurs avantageux que chaque plaque chauffante du plateau inférieur présente des rainures longitudinales correspondant au passage des organes fixes de support. De préférence, les organes fixes de support sont réalisés sous la forme d'arceaux tubulaires, de façon à pouvoir être parcourus par un fluide de refroidissement.

Selon un mode de réalisation avantageux, les moyens mécaniques d'actionnement sont propres à chaque plateau concerné, tout en étant de même conception.

Plus particulièrement, les moyens mécaniques d'actionnement comportent, pour chaque plateau, un système à vilebrequin, avec vérin (rotatif ou linéaire) et biellettes de liaison articulées sur le plateau concerné. Il est d'ailleurs intéressant que ces moyens comportent, pour une extrémité avant ou arrière de chaque plateau, un vérin rotatif faisant tourner un arbre transversal sur lequel sont montées les biellettes associées, une transmission étant prévue pour entraîner simultanément un arbre transversal, prévu à l'autre extrémité dudit plateau et également muni de biellettes associées ; à titre d'exemple, cette transmission est réalisée par un cadre mobile longitudinalement, ledit cadre présentant à chaque extrémité une crémaillère engrénant avec un pignon associé solidaire de l'arbre transversal concerné.

Il est par ailleurs intéressant que le dispositif de chauffage comporte également des moyens supplémentaires de guidage associés à chaque plateau, afin d'obtenir un calage de référence dudit plateau par rapport au bâti fixe ; en particulier, ces moyens sont essentiellement constitués par un barreau transversal solidaire du bâti fixe, sur lequel passe un étrier en U solidaire du plateau concerné : ceci permet d'obtenir une référence parfaite pour chaque plaque chauffante, avec un parallélisme très satisfaisant.

D'autres caractéristiques et avantages de l'invention apparaîtront plus clairement à la lumière de la description qui va suivre et des dessins annexés, concernant un mode de réalisation particulier, en référence aux figures où :

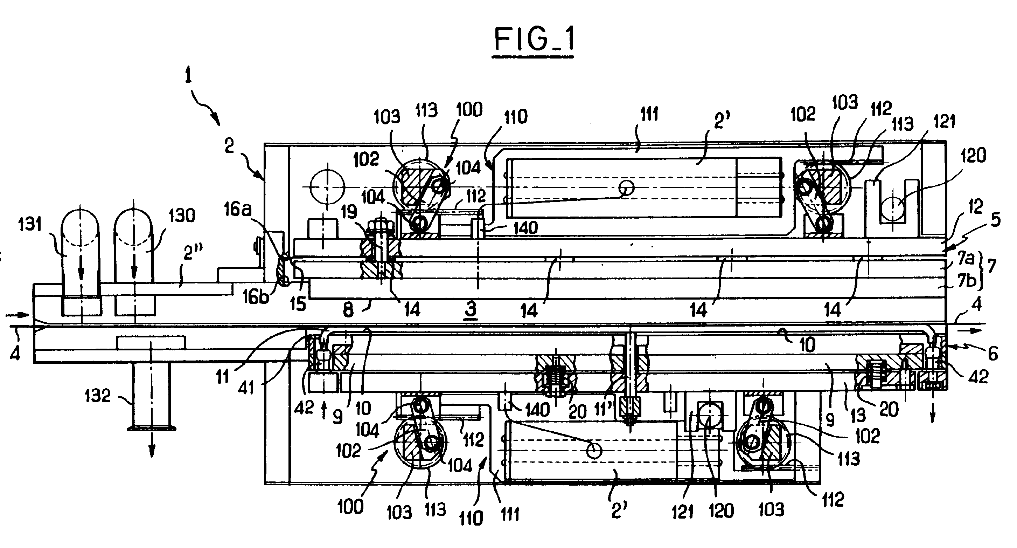

- la figure 1 est une vue en coupe longitudinale illustrant un dispositif de chauffage conforme à l'invention, dont le plateau supérieur est en position haute et le plateau inférieur en position basse (la bande thermoplastique passe alors sur les arceaux de support refroidis par circuit d'eau associé), des arrachements permettant en outre de distinguer certains détails structurels (clinquant d'étanchéité, montage flottant des plaques chauffantes du plateau inférieur, arceaux de support);

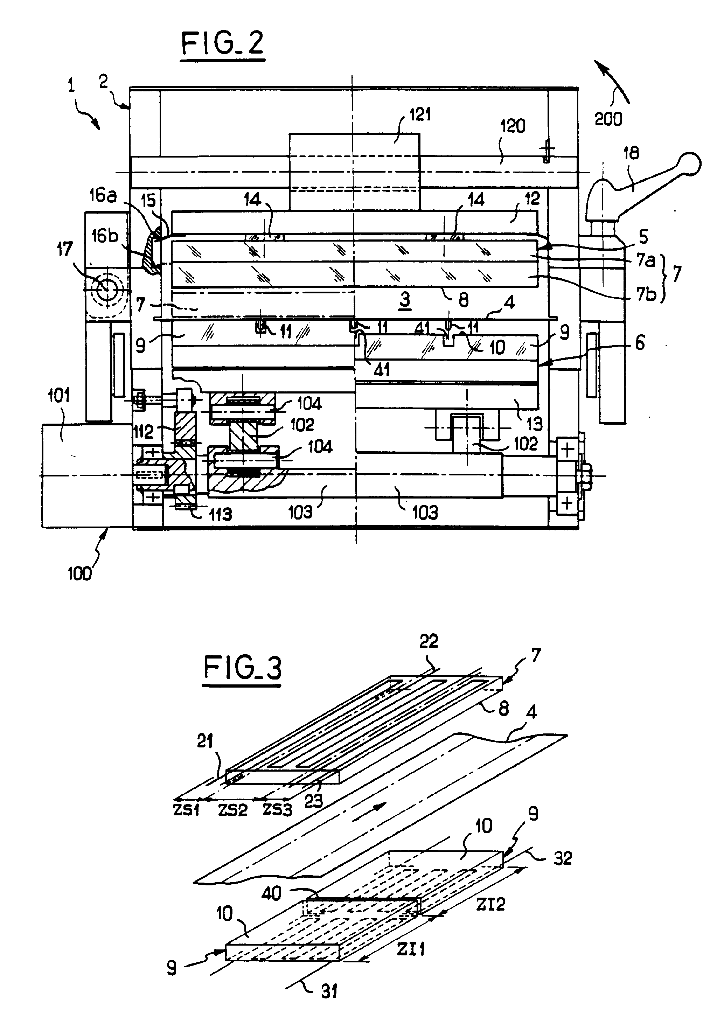

- la figure 2 est une vue avant du dispositif de la figure 1, dans laquelle le plateau inférieur est illustré en position haute pour la demi-vue de gauche (la position basse du plateau supérieur n'est que partiellement rappelée en traits mixtes), et en position basse sur la demi-vue de droite, un arrachement permettant en outre de mieux distinguer une partie des moyens mécaniques d'actionnement associés au plateau inférieur ;
- la figure 3 est une représentation schématique des plaques chauffantes de chacun des plateaux, avec la bande thermoplastique passant entre ces plaques, illustrant un mode de répartition particulier des résistances chauffantes, avec ici trois zones de chauffage distinctes pour le plateau supérieur, et deux zones distinctes pour le plateau inférieur.

La figure 1 illustre un dispositif de chauffage 1 conforme à l'invention, permettant de chauffer dans des conditions optimales une bande thermoplastique 4 stérilisée servant à réaliser des récipients par thermoformage, avant que ladite bande ne parvienne au poste de travail suivant de formage proprement dit desdits récipients.

Le dispositif de chauffage 1 comporte un bâti supérieur 2 à l'intérieur duquel est définie une enceinte fermée 3 délimitée par un plateau supérieur 5 et par la bande thermoplastique 4 elle-même, ladite enceinte fermée étant susceptible d'être balayée par un flux d'air stérile protégeant la face supérieure de ladite bande thermoplastique. Il convient d'ores et déjà de noter que cette disposition permet, ainsi que cela est expliqué plus en détail par la suite, de limiter la zone stérile, et ainsi d'éviter la nécessité d'une intégration globale dans une enceinte de grande dimension.

Conformément à un aspect essentiel de l'invention, le plateau supérieur 5 est déplaçable parallèlement à lui-même entre une position basse de travail et une position haute de repos, et ce plateau supérieur 5 comporte une plaque chauffante unique 7 qui est d'une part chauffée sur toute sa longueur, en considérant la direction de défilement de la bande thermoplastique 4, et qui présente d'autre part une face inférieure 8 lisse contactée par ladite bande en position basse de travail.

De plus, le dispositif comporte en outre un plateau inférieur 6, qui est déplaçable parallèlement à lui-même et au plateau supérieur 5 entre une position haute de travail et une position basse de repos, et ce plateau inférieur 6 comporte au moins une plaque chauffante 9 présentant des empreintes conformément à la technique courante en la matière, empreintes correspondant aux récipients à réaliser, et une face supérieure 10 contactée par la bande thermoplastique 4 en position haute de travail.

Il convient d'insister plus particulièrement sur les caractéristiques précitées concernant le plateau supérieur 5, caractéristiques qui relèvent d'une approche se démarquant radicalement des techniques connues. En effet, la face inférieure 8 du plateau supérieur 5 est ici lisse, c'est-à-dire ne présente pas d'empreintes en relief contrairement à ce qui se passe dans les machines connues: seul le plateau inférieur 6, et plus exactement la ou les plaques chauffantes 9 qu'il supporte, présente des empreintes, et de ce fait des zones non concernées par le chauffage proprement dit entre ces empreintes. On a ainsi constaté, de façon tout à fait surprenante pour l'homme de l'art, qu'il était possible de supprimer les empreintes sur la face inférieure du plateau supérieur, sans pour cela nuire aucunement à la qualité de l'apport thermique concernant la bande thermoplastique ni à la rigidité des zones laissées froides : on comprend alors aisément qu'une telle mesure supprime de facto tout problème de coïncidence entre les empreintes des plateaux chauffants superposés, ce qui représente un progrès technique considérable par rapport aux machines existantes. Il devient dès lors concevable d'obtenir une stabilité et une homogénéité beaucoup plus satisfaisantes pour l'apport thermique concernant la bande thermoplastique.

Ainsi, dans le cadre du dispositif de l'invention, le plateau supérieur 5 réalise un chauffage de la bande thermoplastique 4 par contact, et ce sur toute la largeur de ladite bande, ce chauffage étant en outre effectué dans un volume stérile de faible dimension.

Lors du chauffage de la bande thermoplastique 4, le plateau supérieur 5 est en position basse et le plateau inférieur 6 en position haute, l'intervalle séparant les faces en regard desdits plateaux étant de l'ordre de 2 mm. De ce fait, on parvient à s'affranchir en grande partie du phénomène de pompage, car ce débattement de 2 mm correspond à un mouvement de la bande thermoplastique elle-même, et non au mouvement d'un plateau chauffant. Le plateau supérieur 5 est remonté vers sa position haute seulement lors de l'arrêt de la machine, et non pas lors de l'arrêt du défilement de la bande thermoplastique 4, cette remontée étant effectuée par l'intermédiaire de moyens mécaniques d'actionnement 100 qui seront décrits plus loin en détail, et avec un mouvement relativement lent évitant là encore tout effet de pompage, ainsi naturellement que toute surchauffe de la bande thermoplastique.

Pour ce qui est du plateau inférieur 6, lorsque celui-ci est en position basse, il est prévu selon une autre caractéristique de l'invention d'organiser un support convenable pour la bande thermoplastique 4. A cet effet, le dispositif comporte des organes fixes de support 11 montés adjacents à la ou aux plaques chauffantes 9 du plateau inférieur 6, de telle façon que la bande thermoplastique 4 glisse sur ces organes fixes lors du passage de celle-ci dans l'enceinte fermée 3, lesdits organes fixes assurant ainsi seuls le support de ladite bande lorsque le plateau inférieur est en position basse. La structure de ces organes de support 11 sera décrite plus en détail dans la suite de la description.

Ainsi que cela est visible sur les figures 1 et 2, le plateau supérieur 5 est essentiellement constitué par la plaque chauffante 7, et par une plaque supérieure 12 fixée à ladite plaque chauffante, cette plaque supérieure étant reliée aux moyens mécaniques d'actionnement 100 servant à déplacer ledit plateau supérieur, de façon que lesdits moyens soient disposés en zone froide au-dessus dudit plateau, en dehors de la zone stérile. Cette caractéristique présente de nombreux avantages dans la pratique, car les moyens mécaniques d'actionnement peuvent être ainsi disposés en dehors de l'enceinte stérile 3 proprement dite, ce qui évite toute altération du caractère stérile dans ladite enceinte, et améliore la fiabilité du fonctionnement des moyens mécaniques d'actionnement 100. Il est en outre préférable d'isoler thermiquement la plaque supérieure 12 de la plaque chauffante 7 : à cet effet, la plaque supérieure 12 du plateau supérieur 5 est montée à distance de la plaque chauffante 7, avec interposition de cales intermédiaires isolantes 14.

Il est par ailleurs prévu un clinquant périphérique saillant 15, ici fixé sous le rebord de la plaque supérieure 12, pour préserver l'étanchéité de l'enceinte fermée 3, tant en position haute qu'en position basse du plateau supérieur 5. Un arrachement prévu sur les figures 1 et 2 permet de distinguer la présence de deux rebords 16a et 16b prévus sur le bâti fixe, le clinquant périphérique 15 coopérant, en position haute du plateau supérieur 5, avec le rebord supérieur 16a ce qui préserve l'étanchéité de l'enceinte fermée 3 en position de repos ; de même, en position basse du plateau supérieur 5, c'est-à-dire en position de travail de la machine, le clinquant 15 est au contact du rebord 16b, ce qui préserve là encore l'étanchéité de l'enceinte fermée 3, le volume stérile concerné étant cependant considérablement diminué.

Sur le mode de réalisation illustré ici, on constate que la plaque chauffante 7 du plateau supérieur 5 est constituée par une première plaque 7a, et par une deuxième plaque 7b fixée en-dessous de la première plaque, la face inférieure de cette deuxième plaque 7b présentant de préférence un plaquage lisse pour le contact avec la bande thermoplastique 4. Ceci permet de faciliter la réalisation de la plaque chauffante 7, tout en participant à l'homogénéité de l'apport thermique. En effet, la première plaque 7a peut être rainurée inférieurement pour recevoir des résistances chauffantes (ce rainurage n'a pas été représenté sur les figures 1 et 2 pour ne pas charger la représentation), la deuxième plaque 7b étant simplement prévue lisse sur ses deux faces, et en particulier munie inférieurement d'un plaquage lisse pour le contact avec la bande thermoplastique 4. Dans la pratique, on pourra réaliser les plaques 7a et 7b en aluminium, avec une épaisseur suffisamment importante pour conférer une bonne inertie thermique à l'ensemble, le plaquage inférieur lisse 8 associé à la deuxième plaque 7b étant en matière plastique, par exemple en polytétrafluoréthylène.

Il sera en outre intéressant de prévoir que la plaque chauffante 7 contient au moins une résistance chauffante dont la disposition est prévue pour un apport thermique aussi homogène que possible, et de préférence une pluralité de résistances indépendantes entre elles, définissant ainsi une succession de zones longitudinales de chauffage. Il sera revenu ultérieurement sur la possibilité d'un tel agencement dans le cadre de la description associée à la figure 3.

Ainsi que cela est visible sur la figure 2, le châssis supérieur 2 est avantageusement articulé, afin d'autoriser un accès aisé et rapide à l'intérieur de l'enceinte 3. A cet effet, il est prévu un axe d'articulation 17, disposé parallèlement à la direction de défilement de la bande thermoplastique 4, et un verrou associé dont on distingue la poignée 18 prévue pour en assurer la fermeture étanche. Cette caractéristique est très avantageuse dans la pratique, et représente un progrès considérable au niveau de l'accessibilité et de la démontabilité de la machine. En effet, en position ouverte (le sens d'ouverture est indiqué par la flèche 200), l'opérateur peut immédiatement contrôler l'état de propreté du plaquage lisse prévu en face inférieure du plateau supérieur 5, et éventuellement le nettoyer si cela s'avère nécessaire pour ne pas nuire à la qualité de la stérilisation. L'opérateur peut également contrôler l'état de surface du plateau inférieur au niveau des empreintes de celui-ci. En outre, le démontage des plaques chauffantes peut alors être aisément effectué, et ce dans un temps raisonnable : pour la plaque chauffante 7 du plateau supérieur, il suffit de démonter les fixations par goujons (une telle fixation est mieux visible sur l'arrachement correspondant prévu sur la figure 1, avec un goujon référencé 19) ; pour la ou les plaques chauffantes 9 du plateau inférieur, le démontage est un peu plus compliqué du fait de la présence des organes de support en forme d'arceaux 11, mais ce démontage ne pose aucun problème pour l'opérateur.

Le plateau inférieur 6 est quant à lui essentiellement constitué par une plaque inférieure 13 sur laquelle est ou sont montées la ou les plaques chauffantes 9, ladite plaque inférieure étant reliée à des moyens mécaniques d'actionnement 100 servant à déplacer ledit plateau inférieur, de façon que lesdits moyens soient disposés en zone froide en dessous dudit plateau, comme pour le plateau supérieur 5.

Il est en outre intéressant que la ou les plaques chauffantes 9 du plateau inférieur 6 soient reliées à la plaque inférieure 13 par un montage flottant : ceci peut être par exemple réalisé par interposition de ressorts hélicoïdaux 20, comme cela est visible au niveau des arrachements correspondants en figure 1 (dans la pratique, il sera prévu de disposer quatre ou six ressorts pour chaque plaque chauffante). Un tel montage flottant pour la ou les plaques chauffantes du plateau inférieur permet d'obtenir une pression de contact constante sur la face inférieure de la bande thermoplastique lorsque le plateau inférieur 6 est en position de travail. Ceci est important dans la pratique, car toute irrégularité de chauffage du fait de la pression de contact au niveau des empreintes du plateau inférieur peut provoquer l'apparition de défauts plus ou moins importants sur les récipients formés.

Il est en fait avantageux que le plateau inférieur 6 comporte une pluralité de plaques chauffantes 9 indépendantes, organisées successivement sur sa longueur, en considérant la direction de défilement de la bande thermoplastique 4. Ceci est d'abord important pour préserver le parfait positionnement des plaques chauffantes, lequel est naturellement plus aisé avec des plaques dont le dimensionnement reste raisonnable, mais ceci permet aussi d'organiser une succession de zones de chauffage dès lors que chaque plaque chauffante 9 contient une résistance chauffante indépendante.

Si l'on se reporte à la figure schématique de la figure 3, on comprendra plus facilement comment la structure et l'organisation des plaques chauffantes conformément à la présente invention permettent de maîtriser le mieux possible l'apport thermique de ces plaques chauffantes. On distingue ainsi la plaque chauffante 7 du plateau supérieur dans laquelle sont prévues plusieurs résistances chauffantes, ici trois résistances 21, 22, 23, indépendantes entre elles, et définissant une succession de zones longitudinales de chauffage ZS1, ZS2, ZS3. Dans la pratique, il sera prévu pour chaque zone une sonde de régulation électronique associée avec thyristor, ce qui permet de préserver avec une excellente stabilité la répartition de l'apport thermique tel qu'il a été prédéterminé en fonction des conditions du moment. En particulier, la présence de zones marginales ZS1 et ZS3 permet de moduler de façon particulière l'apport thermique concernant la zone des bords de la bande thermoplastique 4.

De la même façon, les plaques chauffantes inférieures 9 (ici deux plaques chauffantes) contiennent chacune une résistance indépendante 31, 32, ce qui permet de définir une succession de zones de chauffage ZI1 et ZI2. On pourra naturellement prévoir plus de deux plaques chauffantes 9, afin de mieux tenir compte des zones d'entrée et de sortie de l'enceinte chauffée. Là encore, une sonde de régulation associée sera prévue, comme pour la plaque chauffante du plateau supérieur. De telles sondes 140 sont visibles sur la figure 1, associées au contrôle de la température pour chaque plateau.

On parvient finalement ainsi à maîtriser parfaitement l'apport thermique, et à s'affranchir des différentes perturbations possibles susceptibles d'affecter la régularité des températures.

Chaque plaque chauffante 9 du plateau inférieur 6 présente par ailleurs des rainures longitudinales 41, mieux visibles sur la figure 2, correspondant au passage des organes fixes de support 11. De même, il est avantageux de prévoir, au niveau de la fente transversale 40 (référencée en figure 3) séparant deux plaques chauffantes 9 adjacentes du plateau inférieur 6, un organe fixe supplémentaire de support 11′. D'une façon générale, les organes fixes de support 11 et 11′ seront de préférence réalisés sous la forme d'arceaux tubulaires, de façon à pouvoir être parcourus par un fluide de refroidissement. La figure 1 permet ainsi de distinguer l'un de ces arceaux 11, dont les extrémités sont raccordées à un embout 42 relié à un circuit de refroidissement, par exemple un circuit d'eau. On parvient ainsi à réaliser un support sur lequel peut glisser la bande thermoplastique, sans risque d'échauffement excessif lorsque le plateau inférieur est en position basse. A titre indicatif, la course du mouvement vertical du plateau inférieur pourra être de l'ordre de 15 mm, et la course du mouvement du plateau supérieur de l'ordre de 20 mm.

On va maintenant s'attacher à décrire plus en détail les moyens mécaniques d'actionnement 100 associés aux plateaux supérieur et inférieur 5, 6.

Ces moyens mécaniques sont de préférence propres à chaque plateau concerné 5, 6, tout en étant cependant de même conception. Il va de soi que les moyens particuliers illustrés ici ne constituent qu'un exemple, et pourront être remplacés par tout système équivalent.

L'arrachement de la figure 2 permet de mieux distinguer les moyens mécaniques d'actionnement associés au plateau inférieur 6, et il suffira de se rappeler que des moyens identiques sont utilisés pour l'actionnement du plateau supérieur 5.

On distingue ainsi un système à vilebrequin, avec vérin rotatif 101, et biellettes de liaison associées 102 articulées sur le plateau concerné. Le vérin rotatif 101 fait tourner un arbre transversal 103 sur lequel sont montées deux biellettes associées 102 par l'intermédiaire d'axes 104, et une transmission est prévue pour entraîner simultanément un arbre transversal 103 prévu à l'autre extrémité du plateau concerné et également muni de biellettes associées 102. Sur la figure 1, les deux vérins rotatifs 101 (un vérin pour chaque plateau) ne sont pas visibles, mais on distingue cependant les arbres transversaux associés 103 correspondants, ici disposés du côté amont. Pour communiquer le mouvement à chaque arbre transversal 103 disposé du côté aval, il est prévu une transmission 110, ici réalisée sous la forme d'un cadre 111 mobile longitudinalement, en coulissant sur une saillie associée 2′ du bâti fixe 2, ledit cadre présentant à chaque extrémité une crémaillère 112 engrénant avec un pignon associé 113 claveté sur l'arbre transversal concerné 103.

Il convient de prévoir également des moyens supplémentaires de guidage associés à chaque plateau 5, 6, afin d'obtenir un calage de référence dudit plateau par rapport au bâti fixe 2. On distingue ainsi sur les figures 1 et 2 des moyens supplémentaires de guidage associés à chaque plateau, ici essentiellement constitués par un barreau transversal 120 solidaire du bâti fixe 2, et un étrier en forme de U 121, solidaire du plateau concerné 5, 6, et dans lequel passe le barreau transversal 120 associé. On parvient ainsi à préserver une excellente géométrie du système, avec une référence précise au bâti fixe de la machine, et sans pour cela nuire aucunement à la qualité de la stérilité dans l'enceinte fermée 3 étant donné que ces moyens de guidage 120, 121, tout comme les moyens mécaniques d'actionnement 100, sont disposés au-dessus du plateau supérieur 5 et en dessous du plateau inférieur 6, c'est-à-dire en zone froide et en dehors du volume stérile parfaitement confiné.

On distingue enfin sur la figure 1 une partie d'entrée 2˝ associée au bâti fixe 2, cette partie étant en fait adjacente à la sortie d'un dispositif de stérilisation et de séchage non représenté ; cette partie 2˝ porte deux tubulures d'admission d'air stérile 130, 131 et une tubulure de sortie 132. La tubulure 130 sert par exemple à admettre de l'air stérile chaud à une température de l'ordre de 80°C, et cette admission d'air stérile sera de préférence réglée de telle façon que l'on puisse maintenir une surpression d'air stérile dans l'enceinte fermée 3. La tubulure 131 permet également de convoyer de l'air stérile vers le dispositif de séchage et de stérilisation de la bande thermoplastique. La tubulure de sortie 132 sert enfin à récupérer l'air chargé de peroxyde provenant du dispositif de séchage et de stérilisation, lors de l'arrêt de la machine. En effet, à l'arrêt de la machine, on soufflera de préférence de l'air stérile frais pour éviter tout gondolage de la bande thermoplastique, et on aspirera en partie inférieure l'air chargé de peroxyde provenant du dispositif de stérilisation, pour le convoyer vers un catalyseur, ceci en phase de stérilisation de la machine.

Il va de soi que l'invention n'est nullement limitée au mode de réalisation qui vient d'être décrit, mais englobe au contraire toute variante reprenant, avec des moyens équivalents, les caractéristiques essentielles figurant aux revendications.

## Revendications

1. Dispositif de chauffage d'une bande thermoplastique stérilisée servant à réaliser des récipients par thermoformage, présentant des éléments chauffants entre lesquels passe la bande thermoplastique, caractérisé par le fait qu'il comporte :
. une enceinte fermée (3) délimitée par un plateau supérieur (5) et la bande thermoplastique (4) elle-même, et susceptible d'être balayée par un flux d'air stérile protégeant ladite bande thermoplastique ;
. ledit plateau supérieur (5) étant déplaçable parallèlement à lui-même entre une position basse de travail et une position haute de repos, ledit plateau supérieur (5) comportant une plaque chauffante unique (7) qui est d'une part chauffée sur toute sa longueur, en considérant la direction de défilement de la bande thermoplastique (4), et présente d'autre part une face inférieure (8) lisse contactée par ladite bande en position basse de travail ;
. un plateau inférieur (6) déplaçable parallèlement à lui-même et au plateau supérieur (5) entre une position haute de travail et une position basse de repos, ledit plateau inférieur (6) comportant au moins une plaque chauffante (9) présentant des empreintes correspondant aux récipients à réaliser et une face supérieure (10) contactée par la bande thermoplastique (4) en position haute de travail ;
. des organes fixes de support (11) montés adjacents à la plaque chauffante (9) précitée du plateau inférieur (6) de telle façon que la bande thermoplastique (4) glisse sur eux lors du passage de celle-ci dans ladite enceinte (3), lesdits organes fixes (11) assurant seuls le support de ladite bande (4) lorsque ledit plateau inférieur (6) est en position basse.

2. Dispositif selon la revendication 1, caractérisé par le fait que le plateau supérieur (5) est essentiellement constitué par la plaque chauffante (7), et une plaque supérieure (12) fixée à ladite plaque chauffante (7), ladite plaque supérieure (5) étant reliée à des moyens mécaniques d'actionnement (100) servant à déplacer ledit plateau supérieur (5), de façon que lesdits moyens (100) soient disposés en zone froide au-dessus dudit plateau (5), en dehors de la zone stérile.

3. Dispositif selon la revendication 2, caractérisé par le fait que la plaque supérieure (12) du plateau supérieur (5) est montée à distance de la plaque chauffante (7), avec interposition de cales intermédiaires isolantes (14).

4. Dispositif selon l'une des revendications 2 et 3, caractérisé par le fait que la plaque supérieure (12) du plateau supérieur (5) présente un clinquant périphérique saillant (15), ledit clinquant (15) coopérant avec un rebord associé (16a, 16b) du bâti fixe (2) pour assurer l'étanchéité de l'enceinte fermée (3), tant en position haute qu'en position basse du plateau supérieur (5).

5. Dispositif selon l'une des revendications 2 à 4, caractérisé par le fait que la plaque chauffante (7) du plateau supérieur (5) contient au moins une résistance chauffante (21, 22, 23) dont la disposition est prévue pour un apport thermique aussi homogène que possible.

6. Dispositif selon la revendication 5, caractérisé par le fait que la plaque chauffante (7) du plateau supérieur (5) contient une pluralité de résistances chauffantes (21, 22, 23), indépendantes entre elles, définissant une succession de zones longitudinales de chauffage.

7. Dispositif selon l'une des revendications 5 et 6, caractérisé par le fait que la plaque chauffante (7) du plateau supérieur (5) est constituée par une première plaque (7a) rainurée inférieurement pour recevoir la ou les résistances chauffantes (21, 22, 23), et par une deuxième plaque (7b) fixée en-dessous de la première (7a), et dont la face inférieure présente un plaquage lisse (8) pour le contact avec la bande thermoplastique (4).

8. Dispositif selon la revendication 7, caractérisé par le fait que la deuxième plaque (7b) constituant la plaque chauffante (7) du plateau supérieur (5) est en aluminium, le plaquage inférieur lisse (8) associé à ladite deuxième plaque (78) étant en matière plastique telle que le polytétrafluoréthylène.

9. Dispositif selon l'une des revendications 1 à 8, caractérisé par le fait que le châssis supérieur du bâti fixe (2) est articulé, afin d'autoriser un accès aisé et rapide à l'intérieur de l'enceinte (3), un verrou associé (18) étant prévu pour en assurer la fermeture étanche.

10. Dispositif selon la revendication 1 et l'une des revendications 2 à 9, caractérisé par le fait que le plateau inférieur (6) est essentiellement constitué par une plaque inférieure (13) sur laquelle est ou sont montées la ou les plaques chauffantes (9), ladite plaque inférieure (13) étant reliée à des moyens mécaniques d'actionnement (100) servant à déplacer ledit plateau inférieur (6), de façon que lesdits moyens (100) soient disposés en zone froide en-dessous dudit plateau (6).

11. Dispositif selon la revendication 10, caractérisé par le fait que la ou les plaques chauffantes (9) du plateau inférieur (6) sont reliées à la plaque inférieure (13) dudit plateau (6) par un montage flottant, de préférence par interposition de ressorts hélicoïdaux (20).

12. Dispositif selon l'une des revendications 10 et 11, caractérisé par le fait que le plateau inférieur (6) comporte une pluralité de plaques chauffantes (9) indépendantes, organisées successivement sur sa longueur, en considérant la direction de défilement de la bande thermoplastique (4).

13. Dispositif selon l'une des revendications 10 à 12, caractérisé par le fait que chaque plaque chauffante (9) du plateau inférieur (6) contient une résistance chauffante (31, 32) indépendante, de façon à définir une succession de zones de chauffage organisées pour un apport thermique aussi homogène que possible.

14. Dispositif selon l'une des revendications 10 à 13, caractérisé par le fait que chaque plaque chauffante (9) du plateau inférieur (6) présente des rainures longitudinales (41) correspondant au passage des organes fixes de support (11).

15. Dispositif selon la revendication 1 et l'une des revendications 10 à 14, caractérisé par le fait que les organes fixes de support (11) sont réalisés sous la forme d'arceaux tubulaires, de façon à pouvoir être parcourus par un fluide de refroidissement.

16. Dispositif selon les revendications 1, 2 et 10, caractérisé par le fait que les moyens mécaniques d'actionnement (100) sont propres à chaque plateau concerné (5, 6), tout en étant de même conception.

17. Dispositif selon la revendication 16, caractérisé par le fait que les moyens mécaniques d'actionnement (100) comportent, pour chaque plateau (5, 6), un système à vilebrequin, avec vérin rotatif (101) et biellettes de liaison (102) articulées sur le plateau concerné.

18. Dispositif selon la revendication 17, caractérisé par le fait que les moyens mécaniques d'actionnement (100) comportent, pour une extrémité avant ou arrière de chaque plateau (5, 6), un vérin rotatif (101) faisant tourner un arbre transversal (103) sur lequel sont montées les biellettes associées (102), une transmission (110) étant prévue pour entraîner simultanément un arbre transversal (103), prévu à l'autre extrémité dudit plateau (5,6) et également muni de biellettes associées (102).

19. Dispositif selon la revendication 18, caractérisé par le fait que la transmission (110) est réalisée par un cadre mobile longitudinalement (111), ledit cadre (111) présentant à chaque extrémité une crémaillère (112) engrénant avec un pignon associé (113) solidaire de l'arbre transversal concerné (103).

20. Dispositif selon l'une des revendications 17 à 19, caractérisé par le fait qu'il comporte également des moyens supplémentaires de guidage (120, 121) associés à chaque plateau (5, 6), afin d'obtenir un calage de référence dudit plateau par rapport au bâti fixe (2).

21. Dispositif selon la revendication 20, caractérisé par le fait que les moyens supplémentaires de guidage sont essentiellement constitués par un barreau transversal (120) solidaire du bâti fixe (2), sur lequel passe un étrier en U (121) solidaire du plateau concerné (5, 6).

## Patentansprüche

1. Vorrichtung zum Erwärmen eines sterilisierten thermoplastischen Bandes zur Herstellung von Behältern durch Thermoformung, die Wärmelemente aufweist, zwischen denen das thermoplastische Band durchläuft,
dadurch **gekennzeichnet**,
daß sie enthält:
. einen umschlossenen Raum (3), abgegrenzt von einem oberen Plateau (5) und dem thermoplastischen Band (4) selbst, so beschaffen, daß er von einem Strom steriler Luft, der das genannte thermoplastische Band schützt, gespült werden kann;
. das genannte obere Plateau (5), das parallel zu sich selbst beweglich ist zwischen einer unteren Arbeitsposition und einer oberen Ruheposition, wobei das obere Plateau (5) eine einzige Wärmplatte (7) enthält, die einerseits über ihre ganze Länge erwärmt wird, hinsichtlich der Durchlaufrichtung des thermoplastischen Bandes, und andererseits eine glatte Innenfläche (8) aufweist, die in der unteren Arbeitsposition Kontakt hat mit dem genannten Band;
. ein unteres Plateau (6), das parallel zu sich selbst und zu dem oberen Plateau (5) beweglich ist zwischen einer oberen Arbeitsstellung und einer unteren Ruhestellung, wobei dieses untere Plateau (6) wenigstes eine Wärmplatte (9) enthält, die versehen ist mit Vertiefungen, die den herzustellenden Behältern entsprechen und eine Oberseite (10), die in in der oberen Arbeitsposition in Kontakt kommt mit dem thermoplastischen Band (4);
. feststehende Auflageteile (11), angrenzend an die Wärmplatte (9) des unteren Plateaus (6), so angebracht, daß das thermoplastische Band (4) auf ihnen gleitet während seiner Passage durch den genannten umschlossenen Raum (3), wobei die genannten feststehenden Teile (11) alleine die Auflage des Bandes (4) gewährleisten, während das untere Plateau (6) sich in der unteren Position befindet.

2. Vorrichtung nach Anspruch 1, dadurch gekennzeichnet, daß das obere Plateau (5) im wesentlichen aus einer Wärmplatte (7) und einer oberen Platte (12) besteht, die an der genannten Wärmplatte (7) befestigt ist, wobei das obere Plateau (5) mit mechanischen Betätigungsmitteln (100) für das Bewegen des oberen Plateaus (5) so verbunden ist, daß die genannten Mittel (100) in der kalten Zone über dem Plateau (5) außerhalb der sterilen Zone angeordnet sind.

3. Vorrichtung nach Anspruch 2, dadurch gekennzeichnet, daß die obere Platte (12) des oberen Plateaus (5) mit Abstand zur Wärmplatte (7) angebracht ist durch dazwischen angebrachte isolierende Unterlagsstücke (14).

4. Vorrichtung nach einem der Ansprüche 2 und 3, dadurch gekennzeichnet, daß die obere Platte (12) des oberen Plateaus (5) eine überstehende periphere Metallfolie (15) aufweist, wobei die genannte Metallfolie zusammenwirkt mit einem dazugehörenden vorstehenden Rand (16a, 16b) des feststehenden Maschinenrahmens (2), um die Dichtheit des umschlossenen Raums (3) zu gewährleisten in der oberen Position ebenso wie in der unteren Position des Plateaus (5).

5. Vorrichtung nach einem der Ansprüche 2 bis 4, dadurch gekennzeichnet, daß die Wärmplatte (7) des oberen Plateaus (5) wenigstens einen Heizwiderstand (21, 22, 23) enthält für eine Wärmezufuhr so homogen wie möglich.

6. Vorrichtung nach Anspruch 5, dadurch gekennzeichnet, daß die Wärmplatte (7) des oberen Plateaus (5) eine Mehrzahl von Heizwiderständen (21, 22, 23) enthält, unabhängig voneinander, die eine Folge von Heiz-Längszonen festlegen.

7. Vorrichtung nach einem der Ansprüche 5 und 6, dadurch gekennzeichnet, daß die Wärmplatte (7) des oberen Plateaus (5) besteht aus einer ersten Platte (7a), unten mit Rillen versehen, um den oder die Heizwiderstände (21, 22, 23) aufzunehmen, und aus einer zweiten Platte (7b), unter der ersten (7a) befestigt, deren Unterseite eine glatte Plattierung aufweist für den Kontakt mit dem thermoplastischen Band (4).

8. Vorrichtung nach Anspruch 7, dadurch gekennzeichnet, daß die die Wärmplatte (7) des oberen Plateaus (5) bildende zweite Platte (7b) aus Aluminium ist, wobei die glatte untere Plattierung (8), angebracht an der genannten zweiten Platte aus Kunststoff ist, wie etwa dem Polytetrafluorethylen.

9. Vorrichtung nach einem der Ansprüche 1 bis 8, dadurch gekennzeichnet, daß das obere Chassis des festen Maschinenrahmens (2) schwenkbar ist, um einen leichten und schnellen Zugang ins Innere des umschlossenen Raums (3) möglich zu machen, wobei ein dazugehörender Riegel (18) den dichten Verschluß gewährleistet.

10. Vorrichtung nach einem der Ansprüche 2 bis 9, dadurch gekennzeichnet, daß das untere Plateau (6) im wesentlichen aus einer unteren Platte (13) besteht, auf die eine oder mehrere Wärmplatten (9) montiert sind, wobei die genannte untere Platte (13) mit mechanischen Betätigungsmitteln (100) für das Bewegen des unteren Plateaus (6) so verbunden ist, das diese Mittel (100) in der kalten Zone unter dem Plateau (6) angeordnet sind.

11. Vorrichtung nach Anspruch 10, dadurch gekennzeichnet, daß die Wärmplatten (9) des unteren Plateaus (6) mit der unteren Platte (13) des genannten Plateaus (6) durch eine lose Montage verbunden sind, vorzugsweise durch die Einfügung von Spiralfedern (20).

12. Vorrichtung nach einem der Ansprüche 10 und 11, dadurch gekennzeichnet, daß das untere Plateau (6) eine Mehrzahl von selbständigen Wärmplatten (9) enthält, die nacheinander über seine Länge angeordnet sind, bezogen auf die Durchlaufrichtung des thermoplastischen Bandes (4).

13. Vorrichtung nach einem der Ansprüche 10 bis 12, dadurch gekennzeichnet, daß die Wärmplatte (9) des unteren Plateaus (6) einen selbständigen Heizwiderstand (31, 32) enthält, um eine Folge von geregelten Heizzonen festzulegen für eine Wärmezufuhr so homogen wie möglich.

14. Vorrichtung nach einem der Ansprüche 10 bis 13, dadurch gekennzeichnet, daß jede Wärmplatte (9) des unteren Plateaus (6) Längsrillen (41) aufweist entsprechend dem Durchgang der feststehenden Auflageteile (11).

15. Vorrichtung nach Anspruch 1 und einem der Ansprüche 10 bis 14, dadurch gekennzeichnet, daß die feststehenden Auflageteile (11) als röhrenförmige Bügel ausgeführt sind, so daß in ihnen eine Kühlflüssigkeit fließen kann.

16. Vorrichtung nach den Ansprüchen 1, 2 und 10, dadurch gekennzeichnet, daß die mechanischen Betätigungsmittel (100) dem entsprechenden Plateau (5, 6) angemessen sind, dabei aber von gleicher Konzeption sind.

17. Vorrichtung nach Anspruch 16, dadurch gekennzeichnet, daß die mechanischen Betätigungsmittel (100) für jedes Plateau (5, 6) ein Kurbelsystem mit Rotationsantrieb (101) und gelenkig an dem betreffenden Plateau gelagerte Verbindungsschwingarme (102) umfassen.

18. Vorrichtung nach Anspruch 17, dadurch gekennzeichnet, daß die mechanischen Betätigungsmittel (100) enthalten, für ein vorderes oder hinteres Ende jedes Plateaus (5, 6), einen Rotationsantrieb (101 ), der eine Querwelle (103) antreibt, auf der die dazugehörenden Schwingarme (102) montiert sind, eine Transmission (110), um simultan eine Querwelle (103) anzutreiben, die sich am anderen Ende des genannten Plateaus (5, 6) befindet und ebenfalls mit dazugehörenden Schwingarmen (102) ausgestattet ist.

19. Vorrichtung nach Anspruch 18, dadurch gekennzeichnet, daß die Transmission (110) aus einem in Längsrichtung beweglichen Rahmen (111) besteht, wobei der genannte Rahmen (111) an jedem Ende eine Zahnstange (112) aufweist, die ineinandergreift mit einem dazugehörenden Ritzel (113), das fest verbunden ist mit der entsprechenden Querwelle (103).

20. Vorrichtung nach einem der Ansprüche 17 bis 19, dadurch gekennzeichnet, daß sie auch zusätzliche Führungsmittel (120, 121) enthält, angebracht an jedem Plateau (5, 6), um eine Referenzpositionierung des Plateaus, bezogen auf den feststehenden Maschinenrahmen (2), zu erhalten.

21. Vorrichtung nach Anspruch 20, dadurch gekennzeichnet, daß die zusätzlichen Führungsmittel im wesentlichen aus einem am Maschinenrahmen (2) befestigten Querstab (120) bestehen, auf dem sich ein U-förmiger Bügel (121) bewegt, der am betreffenden Plateau (5, 6) befestigt ist.

## Claims

1. Apparatus for heating a sterilized thermoplastic strip for use in making receptacles by thermoforming, having heater elements between which the thermoplastic strip passes, characterized by the fact that it comprises:
a closed enclosure (3) delimited by a top slab (5) and by the thermoplastic strip (4) itself, and suitable for being swept by a flow of sterile air protecting said thermoplastic strip;
said top slab (5) being displaceable parallel to itself between a low, working position and a high, rest position; said top slab (5) including a single hot plate (7) which on the one hand is heated along its entire length taken in the travel direction of the thermoplastic strip (4), and on the other hand has a smooth face (8) engaged by said strip in the low, working position;
a bottom slab (6) displaceable parallel to itself and to the top slab (5) between a high working position and a low, rest position; said bottom slab (6) comprising at least one heater plate (9) having shapes corresponding to the receptacles to be made, and a top face (10) engaged by the thermoplastic strip (4) in the high, working position;
fixed support members (11) mounted adjacent to the above-mentioned heater plate (9) of the bottom slab (6) in such a manner that the thermoplastic strip (4) slides over them as it passes through said enclosure (3), said fixed members (11) serving on their own to support said strip when said bottom slab (6) is in its low position.

2. Apparatus according to claim 1, characterized by the fact that the top slab (5) is essentially constituted by the heater plate (7), and a top plate (12) which is fixed to said heater plate (7), said top plate (12) being connected to mechanical actuator means (100) serving to displace said top slab (5), in such a manner that said means are disposed in a cool zone above said slab (5), outside the sterile zone.

3. Apparatus according to claim 2, characterized by the fact that the top plate (12) of the bottom slab (5) is mounted at a distance from the heater plate (7) with intermediate insulating spacers (14) being interposed therebetween.

4. Apparatus according to claim 2 or 3, characterized by the fact that the top plate (12) of the top slab (5) has a projecting peripheral strip (15) which co-operates with an associated rim (16a, 16b) on the fixed housing (2) in order to seal the closed enclosure both when the top slab (5) is in its high position and when it is in its low position.

5. Apparatus according to any one of claims 2 to 4, characterized by the fact that the heater plate (7) of the top slab (5) contains at least one heater resistance element (21,22,23) arranged to apply heat as uniformly as possible.

6. Apparatus according to claim 5, characterized by the fact that the heater plate (7) of the top slab (5) contains a plurality of heater elements (21, 22, 23) which are mutually independent, and which define a succession of longitudinal heating zones.

7. Apparatus according to claim 5 or 6, characterized by the fact that the heater plate (7) of the top slab (5) is constituted by a first plate (7a) having bottom grooves for receiving the, or each, heater resistance element (21, 22, 23), and by a second plate (7b) fixed beneath the first (7a), the bottom face of which having smooth cladding (8) for engagement of the thermoplastic strip (4).

8. Apparatus according to claim 7, characterized by the fact that the second plate (7b) constituting the heater plate (7) of the top slab (5) is made of aluminium, with the smooth bottom cladding (8) associated with said second plate (7b) being made of a plastic material such as polytetrafluoroethylene.

9. Apparatus according to any one of claims 1 to 8, characterized by the fact that the top portion of the fixed housing (2) is hinged so as to provide easy and quick access to the inside of the enclosure (3), with an associated lock (18) being provided to ensure sealed closure.

10. Apparatus according to claim 1, and any one of claims 2 to 9, characterized by the fact that the bottom slab (6) is essentially constituted by a bottom plate (13) on which the, or each, heater plate (9) is mounted, said bottom plate (13) being connected to mechanical actuator means (100) serving to displace said bottom slab (13), in such a manner that said means are disposed in a cool zone beneath said slab (6).

11. Apparatus according to claim 10, characterized by the fact that the, or each, heater plate (9) of the bottom slab (6) is connected to the bottom plate (13) of said slab (6) via a loose mounting, preferably with interposed helical springs (20).

12. Apparatus according to claim 10 or 11, characterized by the fact that the bottom slab (6) includes a plurality of independent heater plates (9) organized lengthwise in succession int he direction of travel of the thermoplastic strip (4).

13. Apparatus according to any one of claims 10 to 12, characterized by the fact that each heater plate (9) of the bottom slab (6) contains an independent heater resistance (31,32) so as to define a succession of heating zones arranged to apply heat as uniformly as possible.

14. Apparatus according to any one of claims 10 to 13, characterized by the fact that each heater plate (9) of the bottom slab (6) has longitudinal grooves (41) corresponding to the passage of the fixed supporting members (11).

15. Apparatus according to claim 1, and any one of claims 10 to 14, characterized by the fact that the fixed supporting members (11) are made in the form of arcuate tubes, thereby enabling a cooling fluid to flow therethrough.

16. Apparatus according to claim 1, 2, and 10, characterized by the fact that the mechanical actuator means (100) are specific to each corresponding slab (5, 6) while both being of the same design.

17. Apparatus according to claim 16, characterized by the fact that the mechanical actuator means (100) comprise a crank system for each slab (5, 6), the system including a rotary actuator (101) and connection rods (102) hinged to the corresponding slab.

18. Apparatus according to claim 17, characterized by the fact that the mechanical actuator means (100) comprise, at a front or rear end of each slab (5, 6): a rotary actuator (101) rotating a transverse shaft (103) on which the associated connecting rods (102) are mounted, with a coupling (110) being provided for simultaneously driving a transverse shaft (103) provided at the other end of said slab (5, 6) and likewise provided with associated connection rods (102).

19. Apparatus according to claim 18, characterized by the fact that the transmission (110) is provided in the form of a longitudinally displaceable frame (111), said frame (111) having a rack (112) at each end meshing with an associated gear wheel (113) fixed to the corresponding transverse shaft (103).

20. Apparatus according to any one of claims 17 to 19, characterized by the fact that it also includes additional guide means (120, 121) associated with each slab (5, 6) in order to obtain a reference setting of said slab relative to the fixed housing (2).

21. Apparatus according to claim 20, characterized by the fact that the additional guide means are essentially constituted by a transverse bar (120) fixed to the fixed housing (2) and on which passes a channel-section member (121) fixed to the corresponding slab (5, 6).
